# EUROPÄISCHE PATENTSCHRIFT

(11) **EP 3 717 752 B1**
(45) Veröffentlichungstag und Bekanntmachung des Hinweises auf die Patenterteilung: **01.02.2023**
(21) Anmeldenummer: 18829196.7
(22) Anmeldetag: 27.11.2018
(51) Int. Cl.: F01K 25/08, F01K 3/18, F23G 5/00

(54) **ANLAGE ZUR ENERGIEERZEUGUNG BEI DER KONVENTIONELLEN ABFALLVERBRENNUNG UND VERFAHREN**
SYSTEM FOR PRODUCING ENERGY IN CONVENTIONAL WASTE INCINERATION AND METHOD
INSTALLATION POUR PRODUIRE DE L'ÉNERGIE LORS DE L'INCINÉRATION D'ORDURES CONVENTIONNELLE ET PROCÉDÉ

(30) Priorität: 28.11.2017 DE 102017010984
(43) Veröffentlichungstag der Anmeldung: 07.10.2020
(73) Patentinhaber: Steinmüller Babcock Environment GmbH, 51643 Gummersbach (DE); Nippon Steel Engineering Co., Ltd., Shinagawa-ku Tokyo 141-8604 (JP)
(72) Erfinder: ZORBACH, Ingo, 51588 Nümbrecht (DE); MÜCK, Michael, 51515 Kürten (DE); BAER, Martin, 51643 Gummersbach (DE)
(74) Vertreter: Bremer, Ulrich
(86) Internationale Anmeldenummer: PCT/DE2018/100961
(87) Internationale Veröffentlichungsnummer: WO 2019/105511

(56) Entgegenhaltungen:
- EP-A2- 2 011 972
- WO-A2-2006/092786
- WO-A2-2011/018814
- WO-A2-2014/195882
- DE-A1-102012 217 339
- DE-A1-102014 202 275

## Beschreibung

Die Erfindung betrifft eine Anlage zur Energieerzeugung bei der konventionellen Abfallverbrennung entsprechend dem Oberbegriff des ersten Patentanspruches und ein Verfahren.

Die Erfindung ist überall dort nutzbar, wo eine konventionelle Abfallverbrennung auf Abfallverbrennungsrosten stattfindet, wobei die entstehende Abwärme zur Energieerzeugung genutzt wird.

Aus DE 10 2014 202275 A1 ist eine Anlage zur Energieerzeugung gemäß dem Oberbegriff des unabhängigen Anspruch 1 bekannt.

Aus DE 198 56 417 A1 ist ein Dampferzeuger mit Verdampfer, Dampftrommel und Überhitzer zum Einsatz in Abfallverbrennungsanlagen bekannt.

Ein Mehrzugkessel in einer Abfallverbrennungsanlage ist in DE 10 2008 027 740 A1 beschrieben.

Die Energienutzung bei einer konventionellen Abfallverbrennung in Abfallverbrennungsanlagen erfolgt über einen einstufigen Dampfprozess. Eine derartige Anlage wird nachfolgend allgemein beschrieben.

Zunächst wird der Abfall durch Zuführung von Luft in einer Brennkammer auf einem Rost verbrannt. Die dabei entstehenden Abgase werden typischerweise in einem Umlaufdampferzeuger, wie einen Naturumlaufdampferzeuger energetisch genutzt und anschließend einer Abgasreinigungsanlage zugeführt. Die Wärmeübertragung vom Abgas an das Wasser-Dampfsystem erfolgt über Strahlungs- und Berührungsheizflächen mit dem Ziel Frischdampf für die Dampfturbine zu erzeugen. Der gesamte Dampferzeuger besteht aus einem Druckgerät.

Der im Verdampfer produzierte Sattdampf wird in der Dampftrommel von Wasser getrennt, in Überhitzer geleitet und anschließende als Frischdampf typischerweise zu einer Dampfturbine geleitet und dort zur Erzeugung elektrischer Energie in einem Generator genutzt. Weiterhin kann der Abdampf der Turbine in einem Heizkondensator zur Erzeugung von Fernwärme genutzt werden. Mit Anzapfungen an der Turbine wird typischerweise der Speiswasserbehälter entgast und aufgewärmt sowie das Kondensat vorgewärmt. Wird kein Heizkondensator verwendet, kommt typischerweise ein luftgekühlter Kondensator zum Einsatz.

Um einen möglichst hohen elektrischen Wirkungsgrad in der Turbine zu erzielen sind für den Dampfprozess möglichst hohe Dampfdrücke und Dampftemperaturen notwendig. Die bei der Abfallverbrennung entstehenden Abgase enthalten korrosive Gase (im wesentlichen Chorwasserstoff HCl und Schwefeldioxid SO2) sowie korrosive, Schlacke bildende Stäube (Kalium- und Bleisalze uvm.). Aufgrund der deutlichen Zunahme der Korrosionsrate mit steigender Temperatur, ist der Dampfdruck auf etwa 90 bar und die Frischdampftemperatur auf ca. 500°C begrenzt. Eine weitere Einschränkung ist, dass zur Vermeidung von Hochtemperaturkorrosion sowie Verschlackung der Überhitzerflächen die Abgastemperatur vor dem ersten Überhitzer im Bereich von 650 - 700°C liegen sollte, bzw., dass die Überhitzerheizflächen im Strahlungsbereich kostenaufwendig und wartungsintensiv sind.

In einem Naturumlaufkessel haben alle Membranwände ungefähr die Temperatur des zugehörigen Sattdampfdruckes. Der Dampfdruck ist im Wesentlichen durch das heiße Abgas und die Wandtemperatur nach der Brennkammer, also im 1. Kesselzug begrenzt (~ 90 bar Sattdampfdruck entspricht etwa 308°C). Die Frischdampftemperatur ist durch die Hochtemperaturkorrosion an den Überhitzern begrenzt. Zur Reduktion der Korrosion wird die Membranwand und der Endüberhitzer typischerweise mit metallischen oder keramischen Schutzschichten versehen. Beispielsweise kommt hier Auftragsschweißung aus Inconel zum Einsatz. Der Einsatz dieser Schutzschichten ist mir hohen Kosten verbunden.

Eine Alternative zum Dampfprozess mit Wasser als Arbeitsmedium stellt der ORC-Prozess (Organic Rankine Cycle) dar. Hier wird anstelle von Dampf ein organisches Arbeitsmedium mit einer wesentlich niedrigeren Verdampfungsenthalpie als Wasser eingesetzt, welches die Turbine antreibt. Seit 2010 haben sich die verfügbaren Anlagengrößen sowie der Wirkungsgrad der ORC Anlagen durch die Verfügbarkeit neuer Arbeitsmedien stark verbessert. Der ORC Prozess läuft auf einem geringeren Temperaturniveau ab. Werden dem ORC-Prozess Verbrennungsanlagen zur Energiebereitstellung vorgeschaltet, sorgt ein Trägermedium, meist Thermalöl für die Übertragung der bei der Verbrennung erzeugten Wärme. Das organische Arbeitsmedium welches die Turbine antreibt, wird in einem separaten geschlossenen Kreislauf geführt.

Bei der Abfallverbrennung ist die Nutzung von Wasser als Wärmeübertragungsmedium von Vorteil. Die Abfallverbrennung ist eine Speicherfeuerung, d.h. die Energiezufuhr kann nicht spontan abgestellt werden, hier bietet Wasser bzw. Dampf als Übertragungsmedium einen Schutz für das System in mehrerer Hinsicht. Treten in einer Anlage zum Beispiel korrosionsbedingte Rohrreißer auf, dann tritt nur Wasser (flüssig und/oder dampfförmig) aus den Rohren aus. Dies stellt nur aufgrund der hohen Temperatur und des Drucks des Arbeitsmediums eine Gefahr dar. Würde hingegen ein im OCR Prozess verwendetes Thermalöl aus einem Rohr austreten, so kann es zu einem Brand im Kessel kommen. Dieser ist dann nur noch sehr schwer zu löschen und würde zu entsprechend großen Schäden und Sicherheitsrisiken führen.

Ein weiterer Vorteil von Wasser besteht darin, dass der Druck im Kessel durch eine zielgerichtete Entspannung des Wassers in die Atmosphäre (typischerweise auf dem Dach des Kesselhauses) entlastet werden kann. Dies ist insbesondere dann nötig, wenn es in der Anlage zu einem totalen Stromausfall kommt. Hier sorgt dann ein Sicherheitsventil für den automatischen Schutz der Anlage.

Dampferzeuger mit mehreren Druckniveaus, d.h. Hochdruck (HD) und Niederdruck (ND) werden bereits für Gas und Dampf (GuD) Anlagen zur Optimierung des Wirkungsgrades eingesetzt. Der produzierte Dampf wird direkt der Turbine zugeführt. Durch die verschiedenen Druckniveaus kann mehr Abwärme aus dem Abgas der Gasturbine genutzt werden. Beim GuD Abhitze-Dampferzeuger ist das Hochdruck-System (HD), welches auf einem höheren Temperaturniveau arbeitet, im Abgasweg dem Niederdruck-System (ND) vorgeschaltet. Mit eine derartigen Schaltung lässt sich Korrosion gerade nicht vermindern. Damit können die bei GuD-Anlagen typischen Schaltungen in einer Abfallverbrennung aufgrund der Korrosionsbedingungen nicht genutzt werden. Außerdem würden solche Schaltungen durch deren Komplexität die Anlageninvestition ohne nennenswerte Verbesserung erhöhen. Durch die geringe absolut übertragbare Wärmemenge bei der Abfallverbrennung ist eine solche Schaltung für Dampfprozesse außerdem unwirtschaftlich.

Weitere derartige Anlagen sind in WO 2014/195882 A2 und EP 2 011 972 A2 beschrieben.

Ausgehend von diesem Stand der Technik ist es Aufgabe der Erfindung, eine Anlage und ein Verfahren zur Energieerzeugung bei der konventionellen Abfallverbrennung zu entwickeln, bei der die Korrosion im Dampfkessel und die Größe der Heizfläche verringert werden kann.

Diese Aufgabe wird durch eine Anlage nach den Merkmalen des ersten Patentanspruches und ein Verfahren nach den Merkmalen des Anspruches 4 gelöst.

Unteransprüche geben vorteilhafte Ausgestaltungen der Erfindung wieder.

Die erfindungsgemäße Anlage und das erfindungsgemäße Verfahren kombinieren in einer konventionellen Abfallverbrennungsanlage einen konventionellen Dampfkessel mit einem ORC-Prozess (Organic Rankine Cycle) mit dem Vorteil, dass die Korrosion durch Abgase am Dampfkessel durch eine besondere Heizflächenschaltung minimiert wird, wobei gleichzeitig ein hoher Wirkungsgrad erzielt werden kann.

Unter einem ORC-Prozess wird hierbei ein Prozess verstanden, bei dem anstelle von Dampf ein organisches Arbeitsmedium mit einer wesentlich niedrigeren Verdampfungsenthalpie als Wasser eingesetzt wird, welches in einem Kondensator erhitzt wird und eine ORC-Turbine antreibt. Der ORC-Prozess läuft auf einem geringeren Temperaturniveau ab. Das organische Arbeitsmedium welches in einem Kondensator erhitzt wird und die Turbine antreibt, wird in einem separaten geschlossenen Kreislauf geführt.

Die erfindungsgemäße Lösung sieht zur Kopplung beider Anlagenteile und Prozesse in der Weise vor, dass das mit Wasser betriebene Dampferzeugersystem bestehend aus mindestens einem Hochdruck (HD)-Dampfsystem und mindestens einem Niederdruck (ND)-Dampfsystem mit dem ORC-Prozess gekoppelt wird.

Denkbar sind Im Dampferzeugersystem auch mehrere hintereinandergeschaltete Dampferzeugersysteme.

Jedes der mindestens zwei Dampfsysteme bestehen aus einem Verdampfer im Abgasweg, eine nachgeschalteten Dampftrommel, einem Kondensator und Leitungen zwischen den Apparaten. Erfindungsgemäß ist der ND-Verdampfer dem HD-Verdampfer im Abgasweg vorgeschaltet. Das gereinigte Abgas verlässt über einen Kamin die Anlage.

Das ND-Dampfsystem nutzt die Wärme, des in der Brennkammer erzeugten Abgases, in einem Temperaturbereich, der sich von der adiabaten Verbrennungstemperatur des Abfalls bis hinab zu ca. 700°C erstreckt. Durch die hohe Temperatur des Abgases ist ein Teil des ND-Dampfsystems in vorteilhafter Weise als Strahlungswärmetauscher ausgeformt, der als Membranwand die äußere Begrenzung des ND-Verdampfers bildet. Der andere Teil des ND-Verdampfers ist in vorteilhafter Weise als konvektive Bündelheizfläche ausgebildet.

Das HD-Dampfsystem nutzt die Wärme des Abgases in einem Temperaturbereich, der sich von maximal etwa 900°C bis minimal zur Sattdampftemperatur des HD-Dampfes des HD-Dampfsystems erstreckt. Die Heizfläche des HD-Verdampfers ist in vorteilhafter Weise als konvektive Bündelheizfläche in den Abgasweg eingebaut und hat hierdurch die Möglichkeit sich ungehindert und unabhängig vom ND-System zu dehnen

Beide Dampfdrucksysteme sind als Naturumlaufdampferzeuger ausgebildet.

Durch Variation der Dampfdrücke kann das System in einem bestimmten Rahmen flexibel auf geänderte Anforderungen seitens des Brennstoffs und des Verschmutzungsverhaltens des Dampferzeugers reagieren.

Diese Schaltungsvariante der Dampfdrucksysteme dient der Minderung der Hochtemperaturkorrosion aller einer hohen Abgastemperatur ausgesetzten Übertragungsflächen, insbesondere dem ersten Kesselzug und der Brennkammer. Durch den geringen Sattdampfdruck im ND-Dampfsystem haben die Übertragungsflächen Wandtemperaturen im Bereich von nur 200 - 230 °C, was für die Hochtemperaturkorrosion im unkritischen Bereich liegt.

Der ORC-Kreis für den ORC-Prozess besteht aus mindestens zwei Kondensatoren die durch eine Leitung für das organische Arbeitsmedium (ORC-Medium) miteinander und mit einer ORC-Turbine verbunden sind, wobei jeder der beiden Kondensatoren erfindungsgemäß mit einem der beiden Dampfsysteme, also dem ND-, und dem HD- Verdampfer, verbunden ist.

Durch die Wahl des ORC-Mediums als Wärmeträgers wie Cyclopentan (CAS-Nummer 287-92-3) oder Toluol (CAS-Nummer 108-88-3) im ORC-Kreis werden die benötigten Wärmemengen und die Temperaturen der beiden Dampfkreise bzw. Dampfsysteme festgelegt. Durch die Wahl der Temperaturen wird auch über die Kopplung der Sattdampftemperatur an den Sattdampfdruck direkt auch der Druck in den Dampfsystemen bestimmt. Mit steigenden Systemdrücken im ORC-Kreis nehmen die Verdampfungstemperaturen im ORC-Kreis/Prozess ebenfalls zu. Dadurch müssen auch die Temperaturen und somit auch die Drücke in den Dampfsystemen angehoben werden. Die oben genannten Parameter stellen einen optimalen Bereich dar, bei dem die Gesamtanlage sowohl wirtschaftlich gebaut als auch energetisch effizient betrieben werden kann.

Die Energieerzeugung erfolgt erfindungsgemäß über ein mindestens zweistufiges Dampfsystem. Zunächst wird der Abfall durch Zuführung von Luft in einer Brennkammer verbrannt. Die dabei entstehenden Abgase werden in einem Dampferzeuger energetisch genutzt und anschließend einer Abgasreinigungsanlage zugeführt und durch einen Kamin in die Umwelt entlassen. Die Wärmeübertragung vom Abgas an das Wasser-Dampfsystem erfolgt über Strahlungs- und Berührungsheizflächen an den Membranwänden des Naturumlaufkessels und an Bündelheizflächen des ND- des HD-Verdampfers, mit dem Ziel, Sattdampf oder leicht überhitzten Sattdampf zu erzeugen.

Im erfindungsgemäßen zweistufigen Dampfsystem wird HD- und ND-Dampf erzeugt. Das Druckniveau des HD-Dampfes beträgt 75-120 bar, das Niveau des ND-Dampfes 15-30 bar. Der produzierte Dampf muss nicht überhitzt sein. Wenn er überhitzt wird, dann soll die Überhitzung nur 3-5 K betragen und dient nur der Vermeidung von Kondensatbildung im zuführenden Dampfsystem.

Der produzierte HD-Dampf und ND-Dampf dient zur Wärmeübertragung der durch die Abfallverbrennung frei gewordenen Wärme auf den ORC-Prozess. Die Wärmeübertragung auf das organische Arbeitsmedium erfolgt durch die Kondensation der Dämpfe in separaten Kondensatoren im ORC-System. Hierbei wird im ersten Kondensator das flüssige organische Arbeitsmedium mit ND-Dampf vorgewärmt und teilweise oder gänzlich verdampft. Im zweiten Kondensator wird das organische Arbeitsmedium je nach Zustand nach dem Austritt aus dem ersten Kondensator entweder fertig verdampft und anschließend überhitzt oder noch bis zum Verdampfungspunkt aufgewärmt, verdampft und überhitzt.

Die erfindungsgemäße Lösung weist die folgenden Vorteile auf:
Reduktion der Korrosion am Dampfkessel,
Verkleinerung der erforderlichen Heizflächen zur Wärmeübertragung am Dampferzeuger,
Vermeidung von Überhitzerheizflächen (Dampfüberhitzung ist nicht erforderlich),
Verringerung der Ansprüche an die Dampfqualität gegenüber dem herkömmlichen Dampfprozess durch einen zweiten Kreislauf, da Wärmeübertragung durch Kondensation,
Verringerung an die Speisewasserqualität gegenüber dem herkömmlichen Dampfprozess, da die Komponenten des ORC Prozesses wesentlich geringerer Anforderungen an die Dampfqualität haben,
Reduktion (oder sogar gänzlicher Wegfall der Überhitzerheizflächen) durch sehr geringe Überhitzung (max. 10K), dadurch Verkleinerung des Kessels, des Stahlbaus, der Entaschung, etc. und somit Kostenreduktion. Kostenreduktion durch Verkleinerung der Systeme,
Vereinfachung der Montage durch hohen Vorfertigungsgrad von großen Komponenten,
Verringerung des Inbetriebnahmeaufwandes der Gesamtanlage durch fertig installierte Komponenten,
Erhöhung der Flexibilität der Anlage durch Verbesserung der Teillastfähigkeit,
Erhöhung der Reisezeit. Verringerung von Verschleiß an Ausmauerungen durch Verlängerung der Intervalle zwischen zwei Stillständen.

(Durch die Verlängerung der Reisezeit erhöht sich außerdem der Durchsatz der Anlage, wodurch ein weiterer wirtschaftlicher Vorteil entsteht). Kombination eines konventionellen Dampfkessels mit einem ORC-Prozess ohne Zwischenmedium (Thermalöl).

Minimierung des Risikos bei Rohreißer mit Dampf (Speicherfeuerung)

Im Folgenden werden der Stand der Technik und die Erfindung an einem Ausführungsbeispiel und drei Figuren näher erläutert. Die Figuren zeigen:
- Fig. 1: eine schematische Darstellung einer Anlage nach dem Stand der Technik;
- Fig. 2: eine schematische Darstellung einer erfindungsgemäßen Anlage bzw. des erfindungsgemäßen Verfahrens; und
- Fig. 3: ein QT-Diagramm für die Wärmeübertragung in einem Kondensator von HD-Dampf und ND-Dampf auf das ORC-System.

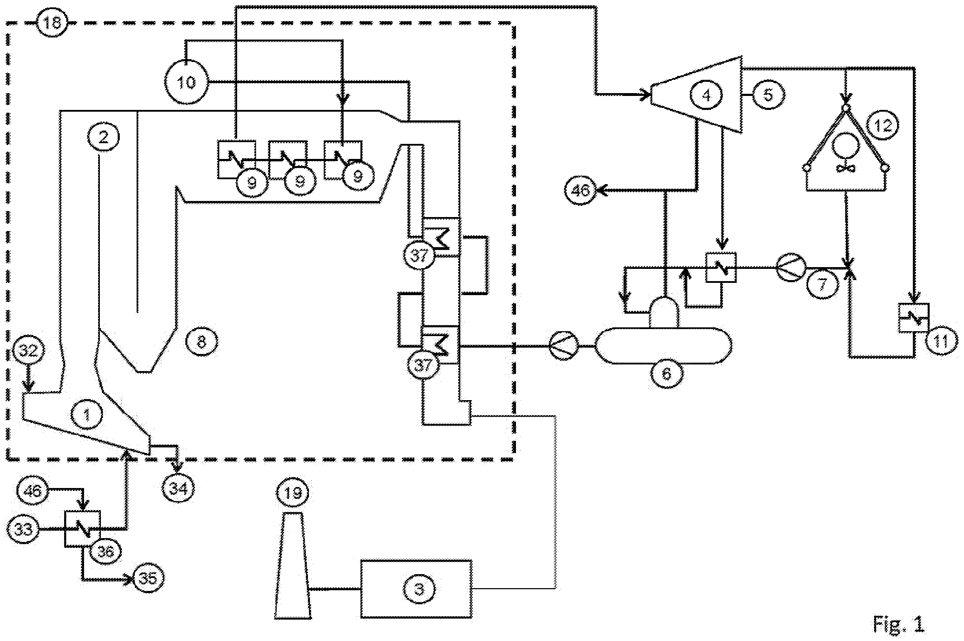

Die Figur 1 zeigt eine Abfallverbrennungsanlage entsprechend dem Stand der Technik. Abfall 32 wird auf einem Verbrennungsrost durch Zuführung von Luft 33 in einer Brennkammer 1 verbrannt. Die dabei entstehenden Abgase werden typischerweise in einem Naturumlaufdampferzeuger 2 energetisch genutzt und anschließend einer Abgasreinigungsanlage 3 zugeführt. Das gereinigte Abgas verlässt die Anlage über einen Kamin 19. Die Wärmeübertragung vom Abgas an das Wasser-Dampfsystem erfolgt über Strahlungs- und Berührungsheizflächen mit dem Ziel, Frischdampf auf mindestens zwei unterschiedlichen Druckstufen für die Dampfturbine 4 zu erzeugen. Der gesamte Dampferzeuger besteht aus einem Druckgerät 18.

Der im Verdampfer produzierte Sattdampf wird in der Dampftrommel 10 von Wasser getrennt, in einen oder mehrere Überhitzer 9 geleitet und anschließend als Frischdampf typischerweise zu einer Dampfturbine 4 geleitet und dort entspannt. Dabei wird die im Dampf enthaltene Druckenergie und dessen Wärme in mechanische Energie gewandelt und diese anschließend zur Erzeugung elektrischer Energie in einem Generator 5 genutzt. Weiterhin kann der Abdampf der Turbine 4 in einem Heizkondensator 11 zur Erzeugung von Fernwärme genutzt werden. Mit Anzapfungen 46 an der Turbine 4 wird typischerweise der Speiswasserbehälter 6 entgast und aufgewärmt sowie das Kondensat 7 vorgewärmt. Wird kein Heizkondensator 11 verwendet, kommt typischerweise ein luftgekühlter Kondensator 12 zum Einsatz.

Um einen möglichst hohen elektrischen Wirkungsgrad in der Turbine zu erzielen, sind für den Dampfprozess möglichst hohe Dampfdrücke und Dampftemperaturen notwendig. Die bei der Abfallverbrennung entstehenden Abgase enthalten korrosive Gase (im wesentlichen Chorwasserstoff HCl und Schwefeldioxid SO2) sowie korrosive, Schlacke bildende Stäube (Kalium- und Bleisalze uvm.). Aufgrund der deutlichen Zunahme der Korrosionsrate mit steigender Temperatur, ist der Dampfdruck auf etwa 90 bar und die Frischdampftemperatur auf ca. 500°C begrenzt. Eine weitere Einschränkung ist, dass zur Vermeidung von Hochtemperaturkorrosion sowie Verschlackung der Überhitzerfläche die Abgastemperatur vor dem ersten Überhitzer 9 im Bereich von 650 - 700°C liegen sollte.

In einem Naturumlaufdampferzeuger 2 haben alle Membranwände 8 ungefähr die Temperatur des zugehörigen Sattdampfdruckes. Der Dampfdruck ist im Wesentlichen durch die Wandtemperatur im heißen Abgas nach der Brennkammer, also im ersten Kesselzug (42) begrenzt (~ 90 bar Sattdampfdruck entspricht etwa 300°C). Die Frischdampftemperatur ist durch die Hochtemperaturkorrosion an den Überhitzern 9 begrenzt. Zur Reduktion der Korrosion wird die Membranwand 8 und der Überhitzer 9 typischerweise mit metallischen oder keramischen Schutzschichten versehen.

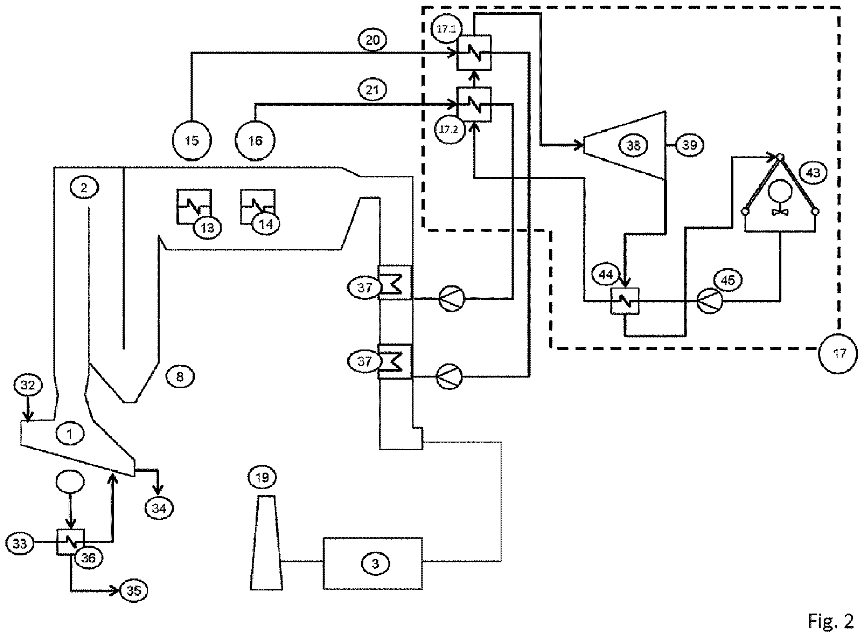

Die Figur 2 zeigt in schematischer Darstellung die erfindungsgemäße Anlage.

Der Dampferzeuger besteht demnach aus einem Hochdruck-Dampfsystem 41, (im Folgenden als HD-Dampfsystem bezeichnet) und einem Niederdruck-Dampfsystem 40,(im Folgenden als ND-Dampfsystem bezeichnet). Hierbei ist ein ND-Verdampfer 13 des Niederdruck-Dampfsystems 40 einem HD-Verdampfer 14 des HD-Dampfsystems 41 im Abgasweg vorgeschaltet.

Das ND-Dampfsystem 40 nutzt die Wärme des in der Brennkammer 1 erzeugten Abgases in einem Temperaturbereich, der sich von der adiabaten Verbrennungstemperatur des Abfalls bis hinab zu ca. 700°C erstreckt. Durch die hohe Temperatur des Abgases ist ein Teil des ND-Verdampfers 13 als Strahlungswärmetauscher ausgeformt, der als Membranwand 8 die äußere Begrenzung des ND-Verdampfers 13 bildet. Der andere Teil des ND-Verdampfers 13 ist als konvektive Bündelheizfläche ausgebildet.

Das HD-Dampfsystem 41 nutzt durch den HD-Verdampfer 14 die Wärme des Abgases in einem Temperaturbereich, der sich von maximal etwa 900°C bis minimal zur Sattdampftemperatur des HD-Dampfes erstreckt. Die Heizflächen des HD-Verdampfers 14 sind als konvektive Bündelheizfläche in den Abgasweg eingebaut.

Beide Dampfdrucksysteme sind als Naturumlaufdampferzeuger ausgebildet. Jedes Dampfdrucksystem 40,41 weist demnach eine eigene Dampftrommel 15, 16 auf, das heißt, dem ND-Dampfsystem 40 ist eine ND-Dampftrommel 15, dem HD-Dampfsystem 41 eine HD-Dampftrommel 16 zugeordnet.

Diese Schaltungsvariante dient der Minderung der Hochtemperaturkorrosion aller einer hohen Abgastemperatur ausgesetzten Übertragungsflächen, insbesondere dem ersten Kesselzug 42 und der Brennkammer 1. Durch den geringen Sattdampfdruck im ND-Dampfsystem 40 haben die Übertragungsflächen des ND-Verdampfers 13 Wandtemperaturen im Bereich von nur 200 - 230 °C, was für die Hochtemperaturkorrosion im unkritischen Bereich liegt.

Durch die Wahl des Wärmeträgers im ORC-Prozess 17, der aus der Speisepumpe 45, den Kondensatoren 17.1, 17.2, Leitungen, in denen ein organisches Arbeitsmedium 31 fließt, einer ORC-Turbine 38, einem Generator 39 sowie einem Kondensator 43 und typischerweise einem Rekuperator 44 besteht, werden die benötigten Wärmemengen und die Temperaturen der beiden Dampfkreise bzw. Dampfsysteme (ND, HD) festgelegt. Durch die Wahl der Temperaturen wird auch über die Kopplung der Sattdampftemperatur an den Sattdampfdruck direkt auch der Druck in den Dampfdrucksystemen 40,41 bestimmt. Mit steigendem Systemdrücken im ORC-Prozess 17 nehmen die Verdampfungstemperaturen im ORC-Kreis 17 ebenfalls zu. Dadurch müssen auch die Temperaturen und somit auch die Drücke in den beiden Dampfdrucksystemen 40,41 angehoben werden. Die oben genannten Parameter stellen einen optimalen Bereich dar, bei dem die Gesamtanlage sowohl wirtschaftlich gebaut als auch energetisch effizient betrieben werden kann.

Die Wärmeübertragung vom Abgas an das Wasser-Dampfsystem erfolgt über Strahlungs- und Berührungsheizflächen von Membranwänden 8 und Bündelheizflächen des HD- und des ND-Verdampfers 13,14 mit dem Ziel Sattdampf oder leicht überhitzten Sattdampf zu erzeugen.

Im Folgenden wird nur das zweistufige Dampfdrucksystem 40,41 näher erläutert:
Es wird HD-Dampf 21 und ND-Dampf 20 über die HD- bzw. ND-Dampftrommel 15, 16 erzeugt. Das Druckniveau des HD-Dampfes 21 beträgt 75-120 bar, das Niveau des ND-Dampfes 20 15-30 bar. Der produzierte Dampf muss nicht überhitzt sein. Wenn er überhitzt wird, dann soll die Überhitzung nur 3-5 K betragen und dient nur der Vermeidung von Kondensatbildung im zuführenden Dampfsystem.

Der produzierte HD-Dampf 21 und ND-Dampf 20 dient zur Wärmeübertragung der durch die Abfallverbrennung frei gewordenen Wärme, auf den ORC-Prozess 17 und somit auf die ORC Turbine 38. Die Wärmeübertragung auf das ORC Medium 31 (organische Arbeitsmedium) erfolgt durch die Kondensation der Dämpfe in separaten Kondensatoren 17.1,17.2 im ORC-System 17. Hierbei wird im ersten Kondensator 17.1, der über Rohrleitungen mit dem ND-Verdampfer 13 verbunden ist, das flüssige organische Arbeitsmedium mit ND-Dampf 20 vorgewärmt und teilweise oder gänzlich verdampft. Im zweiten Kondensator 17.2, der mit dem HD-Verdampfer 14 verbunden ist, wird das ORC Medium 31 mit HD-Dampf 21 je nach Zustand nach dem Austritt aus dem ersten Kondensator 17.1 entweder fertig verdampft und anschließend überhitzt oder noch bis zum Verdampfungspunkt aufgewärmt verdampft und überhitzt. Die Leitungen, in denen sich das organische ORC Medium (Arbeitsmedium) 31 befindet, sind mit der ORC-Turbine 38, die den Generator 39 antreibt, und jedem einzelnen Kondensator 17.1, 17.2 verbunden.

Das gereinigte Abgas verlässt die Anlage über einen Kamin 19.

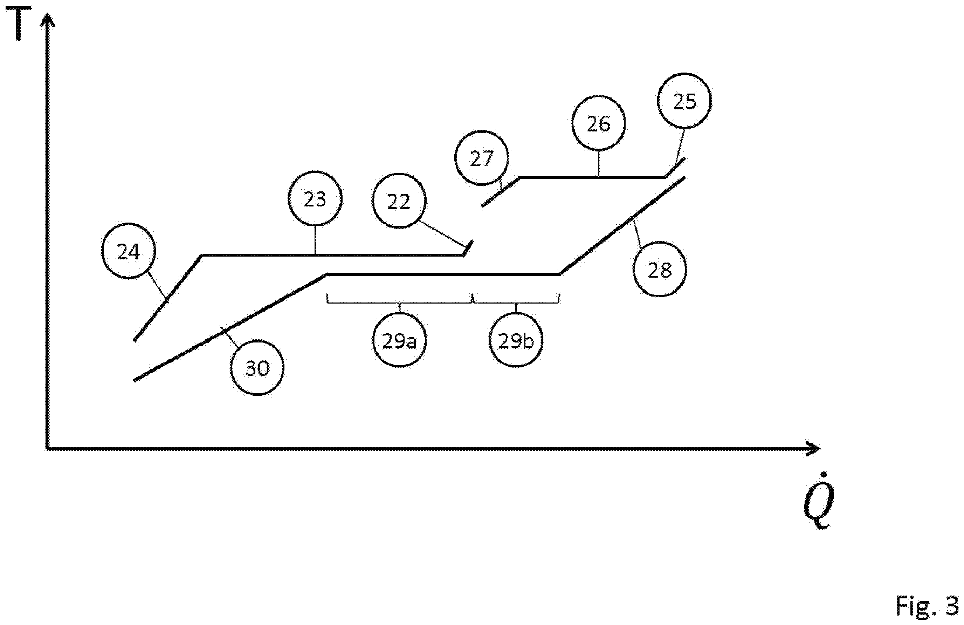

Die Figur 3 zeigt die Wärmeübertragung in Form eines QT-Diagramms.

Der überhitzte ND-Dampf wird abgekühlt 22, isotherm kondensiert 23 und anschließend unterkühlt 24. Gleichzeit wird das ORC Medium aufgewärmt 30 und teilweise verdampft 29a. Die vollständige Verdampfung 29b sowie die Überhitzung 28 des ORC-Mediums, findet durch die Abkühlung des überhitzten HD-Dampfes 25 statt, dessen isotherme Kondensation 26 und seiner Unterkühlung 27. Die Prozessschritte 22, 23 und 24 sowie 29a und 30 finden in einem ersten Kondensator 17.1 statt. Die Prozessschritte 25, 26, 27 sowie 29b und 28 finden in einem zweiten Kondensator 17.2 statt.

Anschließend wird der Dampf des organischen Arbeitsmediums 31 der ORC-Turbine 38 zur Stromgewinnung zugeführt.

### Liste der verwendeten Bezugszeichen

- 1: Brennkammer
- 2: Naturumlaufverdampfer
- 3: Abgasreinigungsanlage
- 4: Turbine
- 5: Generator
- 6: Speisewasserbehälter
- 7: Kondensat
- 8: Membranwand des Naturumlaufdampferzeugers
- 9: Überhitzer in Figur 1
- 10: Dampftrommel
- 11: Heizkondensator
- 12: Kondensator luftgekühlt
- 13: ND-Verdampfer
- 14: HD-Verdampfer
- 15: Dampftrommel des ND-Dampfsystems
- 16: Dampftrommel des HD-Dampfsystems
- 17: ORC-Prozess
- 17.1: erster Kondensator im ORC-System
- 17.2: zweiter Kondensator im ORC-System
- 18: Druckgerät
- 19: Kamin
- 20: ND-Dampf
- 21: HD-Dampf
- 22: Abkühlung des überhitzten ND-Dampfs
- 23: isotherme Kondensation ND-Dampf
- 24: Abkühlung des ND--Kondensats
- 25: Abkühlung des überhitzten HD-Dampfs
- 26: isotherme Kondensation HD-Dampf
- 27: Abkühlung des ND--Kondensats
- 28: Überhitzung des ORC-Mediums
- 29a: teilweise Verdampfung des ORC-Mediums
- 29b: vollständige Verdampfung des ORC-Mediums
- 30: Aufwärmung des ORC-Mediums
- 31: ORC-Medium, Arbeitsmedium
- 32: Abfall
- 33: Luft
- 34: Schlacke
- 35: Kondensat
- 36: Luftvorwärmer
- 37: Speisewasservorwärmer (ECO)
- 38: ORC Turbine
- 39: ORC Generator
- 40: ND Dampfsystem
- 41: HD Dampfsystem
- 42: erster Kesselzug
- 43: Kondensator des ORC Systems
- 44: Rekuperator des ORC Systems
- 45: Speisepumpe des ORC Systems
- 46: Anzapfdampf zur Luftvorwärmung

## Patentansprüche

1. Anlage zur Energieerzeugung aus der konventionellen Abfallverwertung, bestehend aus einer Brennkammer (1) mit einem Verbrennungsrost, einer Abgasreinigungsanlage (3), einem Verdampfer (13, 14), einer Dampftrommel (15, 16), einer Turbine (38), einem Generator (39), einem Kondensator (43) und Leitungen,
**dadurch gekennzeichnet, dass**
der Verdampfer mindestens aus einem Niederdruck-Verdampfer (13) eines Niederdruck-Dampfsystems (40) und einem Hochdruck-Verdampfer (14) eines Hochdruck-Dampfsystems (41) besteht, wobei der Niederdruck-Verdampfer (13) des Niederdruck-Dampfsystems (40) dem Hochdruck-Verdampfer (14) des Hochdruck-Dampfsystems (41) im Abgasweg vorgeschaltet ist und jedes Dampfdrucksystem (40, 41) eine eigene Dampftrommel (15, 16) aufweist, so dass dem Niederdruck-Dampfsystem (40) eine Niederdruck-Dampftrommel (15) und dem Hochdruck-Dampfsystem (41) eine Hochdruck-Dampftrommel (16) zugeordnet ist,
wobei jeder Verdampfer (13, 14) über Leitungen mit der jeweils zugeordneten Dampftrommel (15,16) und separaten Kondensatoren (17.1,17.2) verbunden ist und die separaten Kondensatoren (17.1, 17.2) über Leitungen mit einer ORC-Turbine (38) verbunden sind, wobei zwei separate Kondensatoren (17.1, 17.2) hintereinander geschaltet angeordnet sind, wobei ein erster Kondensator (17.1) über Leitungen mit dem Niederdruck-Verdampfer (13), ein zweiter Kondensator (17.2) über Leitungen mit dem Hochdruck-Verdampfer (14) verbunden und beide Kondensatoren (17.1, 17.2) über Leitungen für ein Arbeitsmedium (32) miteinander und mit einer ORC-Turbine (38) verbunden sind.

2. Anlage nach Anspruch 1, **dadurch gekennzeichnet, dass** der ND-Verdampfer (13) zum Teil als Strahlungswärmetauscher mit einer Membranwand (8) und zum anderen Teil mit einer konvektiven Bündelheizfläche ausgestaltet ist.

3. Anlage nach einem der Ansprüche 1 bis 2, **dadurch gekennzeichnet, dass** der HD-Verdampfer (14) mit einer konvektiven Bündelheizfläche ausgestaltet ist.

4. Verfahren zum Betreiben einer Anlage nach den Merkmalen der Ansprüche 1 bis 3, wobei ein mit Wasser betriebener Dampferzeuger mehrstufig aufgebaut und mit dem ORC-Prozess (17) gekoppelt ist, **dadurch gekennzeichnet, dass**
in einem ersten Kondensator (17.1) das flüssige organische Arbeitsmedium (31) durch einen sich abkühlenden Niederdruck-Dampf (20) vorgewärmt und teilweise oder gänzlich verdampft wird, in einem zweiten Kondensator (17.2) mit Hochdruck-Dampf (21) entweder fertig verdampft und anschließend überhitzt oder noch bis zum Verdampfungspunkt aufgewärmt, verdampft und überhitzt und anschließend einer ORC-Turbine (38) zugeführt wird.

5. Verfahren nach Anspruch 4, **dadurch gekennzeichnet, dass** ein ND-Dampf (20) mit einem Druckniveau von 15 bis 30 bar erzeugt wird.

6. Verfahren nach einem der Ansprüche 4 und 5 **dadurch gekennzeichnet, dass** ein HD-Dampf (21) mit einem Druckniveau von 75 bis 120 bar erzeugt wird.

7. Verfahren nach einem der Ansprüche 4 bis 6, **dadurch gekennzeichnet, dass** die Überhitzung des Dampfes 3 bis 5 K nicht übersteigt.

## Claims

1. System for producing energy in conventional waste incineration, consisting of a combustion chamber (1) having a combustion grate, an exhaust gas cleaning system (3), an evaporator (13, 14), a steam drum (15, 16), a turbine (38), a generator (39), a condenser (43), and lines,
**characterised in that**
the evaporator consists of at least a low-pressure evaporator (13) of a low-pressure steam system (40) and a high-pressure evaporator (14) of a high -pressure steam system (41),
said low-pressure evaporator (13) of said low-pressure steam system (40) being disposed in the exhaust path upstream from said high-pressure evaporator (14) of said high-pressure steam system (41), and each pressure steam system (40, 41) comprising its own steam drum (15, 16) so that said low-pressure steam system (40) is assigned a low-pressure steam drum (15) and said high-pressure steam system (41) is assigned a high-pressure steam drum (16),
each evaporator (13, 14) being connected via lines to the respectively assigned steam drum (15,16) and separate condensers (17.1,17.2), and said separate condensers (17.1, 17.2) are connected via lines to an ORC turbine (38),
where two separate condensers (17.1, 17.2) are arranged in a daisy chain configuration, a first condenser (17.1) being connected via lines to said low-pressure evaporator (13), a second condenser (17.2) being connected via lines to said high-pressure evaporator (14), and both condensers (17.1, 17.2) connected via lines for a working medium (32) to one another and to an ORC turbine (38).

2. System according to claim 1, **characterised in that** said LP evaporator (13) is equipped partly as a radiator heat exchanger having a membrane wall (8) and partly having a convection bundle heating surface.

3. System according to one of the claims 1 through 2, **characterised in that** said HP evaporator (14) is equipped with a convection bundle heating surface.

4. Method for operating a system according to the features of the claims 1 through 3, wherein a water operated steam generator is designed multi-level and coupled with the ORC process (17),
**characterised in that**
the liquid organic working medium (31) is pre-heated in a first condenser (17.1) using a cooling low-pressure steam (20) and evaporated in part or in total, in a second condenser (17.2) using high pressure steam (21) either evaporated fully and thereafter overheated or still heated up to the evaporation point, evaporated and overheated and thereafter fed to an ORC turbine (38).

5. Method according to claim 4, **characterised in that** a LP steam (20) at a pressure level of between 15 and 30 bar is generated.

6. Method according to one of the claims 4 and 5, **characterised in that** a HP steam (21) at a pressure level of between 75 and 120 bar is generated.

7. Method according to one of the claims 4 through 6, **characterised in that** the overheating of the steam does not exceed 3 to 5 K.

## Revendications

1. Installation de production d'énergie à partir de la valorisation conventionnelle des déchets, ladite installation étant constituée d'une chambre de combustion (1) avec une grille de combustion, une installation d'épuration des gaz d'échappement (3), un évaporateur (13, 14), un ballon à vapeur (15, 16), une turbine (38), un générateur (39), un condensateur (43) et des conduites,
**caractérisée en ce que**
l'évaporateur est constitué d'un évaporateur basse pression (13) au moins d'un système à vapeur basse pression (40) et un évaporateur haute pression (14) d'un système à vapeur haute pression (14), l'évaporateur basse pression (13) du système à vapeur basse pression (40) est monté en amont de l'évaporateur haute pression du système à vapeur haute pression (41) dans le passage des gaz d'échappement et chaque système à vapeur sous pression (40, 41) présente son propre ballon à vapeur (15, 16) de sorte qu'au système à vapeur basse pression est associé un ballon à vapeur basse pression (15) et au système à vapeur haute pression est associé un ballon à vapeur haute pression, chaque évaporateur (13, 14) étant relié via des conduites au ballon à vapeur respectivement associé et à des condensateurs séparés (17.1, 17.2), et les condensateurs séparés (17.1, 17.2) étant reliés via des conduites à une turbine ORC (38), deux condensateurs séparés (17.1, 17.2) étant agencés en série, un premier condensateur (17.1) étant relié via des conduites à l'évaporateur passe pression (13), un second condensateur (17.2) étant relié via des conduites à l'évaporateur haute pression (14) et les deux condensateurs (17.1, 17.2) étant reliés l'un à l'autre et à une turbine ORC (38) via des conduites pour un fluide de travail (32).

2. Installation suivant la revendication 1, **caractérisée en ce que** l'évaporateur basse pression (13) étant conçu pour une partie comme échangeur de chaleur rayonnante avec une paroi de membrane (8) et pour une autre partie avec une surface de chauffe par faisceau convectif.

3. Installation suivant la revendication 1 à 2, **caractérisée en ce que** l'évaporateur haute pression (14) est conçu avec une surface de chauffe par faisceau convectif.

4. Procédé de fonctionnement d'une installation suivant les caractéristiques des revendications 1 à 3, un générateur de vapeur à eau étant constitué de plusieurs étages et couplé au processus ORC (17), **caractérisé en ce que** le fluide de travail organique liquide (31) est préchauffé dans un premier condensateur (17.1) par une vapeur basse pression en cours de refroidissement (20) et partiellement ou entièrement vaporisée, soit totalement vaporisée, puis surchauffée ou réchauffée jusqu'au point d'évaporation, vaporisée et surchauffée dans un second condensateur (17.2) avec une vapeur haute pression (21), puis amenée à une turbine ORC (38).

5. Procédé suivant la revendication 4, **caractérisé en ce qu'**une vapeur basse pression (20) est produite avec un niveau de pression de 15 à 30 Bar.

6. Procédé suivant une des revendications 4 et 5, **caractérisée en ce qu'**une vapeur haute pression (21) est produite avec un niveau de pression de 75 à 120 Bar.

7. Procédé suivant une des revendications 4 à 6, **caractérisé en ce que** la surchauffe de la vapeur n'excède pas 3 à 5 K.
